(19) Europäisches Patentamt / European Patent Office / Office européen des brevets

(11) **EP 3 205 067 B1**

(12) **FASCICULE DE BREVET EUROPEEN**

(45) Date de publication et mention
de la délivrance du brevet:
**28.04.2021 Bulletin 2021/17**

(51) Int Cl.:
*H04L 29/06* (2006.01)   *H04L 29/08* (2006.01)
*H04N 21/20* (2011.01)

(21) Numéro de dépôt: **15780816.3**

(22) Date de dépôt: **09.10.2015**

(86) Numéro de dépôt international:
**PCT/EP2015/073469**

(87) Numéro de publication internationale:
**WO 2016/055645 (14.04.2016 Gazette 2016/15)**

(54) **DIFFUSION DE CONTENUS EN STREAMING DANS UN RÉSEAU PAIR À PAIR**

AUSSTRAHLUNG VON INHALTEN DURCH STREAMING IN EINEM PEER-TO-PEER-NETZWERK

BROADCASTING CONTENTS BY STREAMING IN A PEER-TO-PEER NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.10.2014 FR 1459682**

(43) Date de publication de la demande:
**16.08.2017 Bulletin 2017/33**

(73) Titulaire: **Streamroot**
**75001 Paris (FR)**

(72) Inventeurs:
• **DELMAS, Axel**
**F-75019 Paris (FR)**
• **RODIONOV, Nikolay**
**F-75010 Paris (FR)**

(74) Mandataire: **Regimbeau**
**87 rue de Sèze**
**69477 Lyon Cedex 06 (FR)**

(56) Documents cités:
**WO-A2-2012/154287    US-A1- 2006 218 222
US-A1- 2014 280 563**

• **TARA SMALL ET AL: "Scaling Laws and
Tradeoffs inPeer-to-Peer Live Multimedia
Streaming", ACM MULTIMEDIA 2006 &
CO-LOCATED WORKSHOPS : OCTOBER 23 - 27,
2006, SANTA BARBARA, CALIFIRNIA, USA ; MM
'06 ; PROCEEDINGS, ACM PRESS, [NEW YORK,
NY] , 2 janvier 2006 (2006-01-02), pages 539-548,
XP002692213, DOI: 10.1145/1180639.1180754
ISBN: 978-1-59593-447-5 Extrait de l'Internet:
URL:http://delivery.acm.org/10.1145/119000
0/1180754/p539-small.pdf?ip=145.64.134.245
&acc=ACTIVE%20SERVICE&CFID=277354821&
CFTOK
EN=36265971&__acm__=1360868104_32faafed0
cc c44575745adb9938bb606 [extrait le
2013-02-14]**

EP 3 205 067 B1

**Description**

DOMAINE TECHNIQUE GENERAL

La présente invention concerne un procédé de diffusion d'un contenu en streaming dans un réseau pair à pair.

ETAT DE L'ART

Le « streaming » (en français « lecture en continu »), désigne une technique de lecture d'un flux audio ou vidéo « en direct », c'est-à-dire au fur et à mesure qu'il est récupéré depuis Internet par un équipement client. Elle s'oppose ainsi au téléchargement, qui nécessite de récupérer l'ensemble des données du contenu audio ou vidéo avant de pouvoir le lire.

Dans le cas du streaming, le stockage du contenu est provisoire et partiel, les données étant téléchargées en continu dans une mémoire tampon du client (typiquement la mémoire vive), analysées à la volée par son processeur et rapidement transférées vers une interface de sortie (un écran et/ou des enceintes) puis remplacées par de nouvelles données.

De façon traditionnelle, le contenu est mis à disposition sur un serveur de streaming. Le client souhaitant y accéder envoie une requête pour en récupérer les premiers segments (par segment, on entend un bloc des données du contenu, généralement correspondant à quelques secondes de lecture). Lorsqu'il y a suffisamment de données dans la mémoire tampon pour permettre de lire le début du contenu, la lecture démarre. En arrière-plan, le téléchargement du flux se poursuit afin d'alimenter sans cesse la mémoire tampon avec la suite du contenu.

On constate néanmoins que cette approche à ses limites si un grand nombre de clients souhaitent lire le même contenu simultanément : le serveur se retrouve saturé, dans l'incapacité de fournir le contenu à un débit suffisant pour que la lecture soit fluide, et des saccades apparaissent.

Il a récemment été proposé une stratégie alternative basée sur le « peer-to-peer » (P2P, en français pair-à-pair), dans laquelle chaque client agit comme un serveur pour d'autres clients : on parle de pairs. Un pair qui a commencé la lecture du contenu va retransmettre à d'autres les segments qu'il a déjà reçus, et ainsi de suite, d'où une facilité de diffusion quel que soit le nombre de clients intéressés. Cette stratégie est décrite dans la demande internationale WO 2012/154287.

Toutefois, bien que le P2P soit extrêmement efficace pour le téléchargement des fichiers, des difficultés apparaissent lorsqu'il est utilisé pour le streaming. En effet, dans la mesure où le stockage d'un contenu streamé est partiel et temporaire, il faut bien que certains pairs téléchargent les données depuis un serveur pour pouvoir les servir à d'autres pairs. De plus, un contenu téléchargé peut l'être dans n'importe quel ordre : chacun de ses blocs peut être récupéré indépendamment. Or, pour le streaming, il faut respecter l'ordre de lecture de ses blocs, appelées segments (chacun correspondant typiquement à 1 à 8 secondes du contenu, en particulier 1 à 4 secondes pour le live streaming et 3 à 8 secondes pour la vidéo à la demande, voir plus loin).

Ainsi, on peut se retrouver dans des cas paradoxaux où de très nombreux pairs disposeraient par exemple des segments centraux d'un contenu, mais pas de ceux du début, d'où une nécessité de solliciter massivement le serveur de la part des nouveaux pairs sans quoi ils ne peuvent pas débuter la lecture.

De plus, les pairs n'ont pas tous la même capacité d'upload (en français téléversement), c'est-à-dire d'envoi de données à d'autres pairs, ce qui complexifie encore la gestion des flux.

Par ailleurs, un cas particulier du streaming, à savoir le « Live Streaming » (c'est-à-dire le « streaming en direct ») s'avère encore plus complexe à gérer. Le Live streaming propose de diffuser en temps réel des contenus associés à des événements « en live », par exemple des concerts, des conférences, des rencontres sportives, des parties de jeux vidéo, etc., qui sont en train de se dérouler simultanément. Par rapport au streaming d'un contenu déjà intégralement existant tel qu'un film, un contenu diffusé en Live streaming est en effet généré au fur et à mesure que l'événement associé se déroule. Techniquement, comme dans le cas d'un direct à la télévision, un tel contenu ne peut être diffusé qu'avec un léger retard, que l'utilisateur souhaite le plus faible possible. Ce retard est typiquement de l'ordre d'une minute, mais peut descendre jusqu'à une vingtaine de secondes. Ceci fait qu'une liste de lecture de seulement une poignée de segments (tout au plus quelques dizaines) est disponible à chaque instant, les segments de cette liste étant renouvelés dynamiquement selon un roulement : au fur et à mesure que l'événement se déroule des nouveaux segments sont créés, « vieillissent », sont reçus et lus par les clients (à l'issu du retard prévu), et enfin sortent de la liste.

La présente invention vient améliorer la situation en proposant une méthode innovante de gestion des pairs en streaming P2P, en particulier live streaming P2P, qui est optimale en termes d'efficacité de la diffusion du contenu, d'encombrement des mémoires tampons des pairs, et de simplicité algorithmique.

PRESENTATION DE L'INVENTION

La présente invention se rapporte ainsi à un procédé de diffusion d'un contenu en streaming dans un réseau pair à pair d'équipements clients connecté à un serveur de contenu, comme décrit dans la revendication 1, ledit contenu étant constitué d'une séquence de segments stockés sur des moyens de stockage de données du serveur de contenu, chaque équipement client comprenant une mémoire tampon stockant de façon temporaire au moins un segment dudit contenu, le procédé étant caractérisé en ce que chaque équipement client est associé à un niveau, les équipements clients étant classés en L niveaux, chaque niveau k $\in$ [1, L] définissant une liste minimale de segments du contenu correspondant à une durée minimale $t_k$ du contenu et devant être stockés par la mémoire tampon de l'équipement, les listes minimales croissant avec le niveau k, le procédé comprenant des étapes de :

(a) Connexion d'un nouvel équipement client au réseau pair-à-pair ;
(b) Affectation d'un niveau au nouvel équipement client en fonction du nombre d'équipements clients associés à chaque niveau ;
(c) Transmission audit nouvel équipement client depuis le serveur d'au moins chaque segment du contenu absent de la mémoire tampon du nouvel équipement client, qui appartienne à ladite liste de segments du contenu correspondant au niveau affecté au nouvel équipement client.

Selon d'autres caractéristiques avantageuses et non limitatives :

- l'étape (c) comprend la transmission audit nouvel équipement client depuis des équipements clients associés à un niveau supérieur au niveau affecté audit nouvel équipement client d'au moins un segment du contenu absent de la mémoire tampon du nouvel équipement client, qui n'appartienne pas à ladite liste de segments du contenu correspondant au niveau affecté au nouvel équipement client ;
- le réseau pair à pair est en outre connecté à un serveur de gestion de pairs configuré pour gérer la transmissions de segments entre équipements client, l'étape (b) étant mise en oeuvre par le serveur de gestion de pairs (3) ;
- l'étape (a) comprend directement la transmission audit nouvel équipement client depuis le serveur d'au moins un premier segment du contenu ;
- les équipements clients sont classés en L niveaux, chaque niveau $k \in [\![1, L]\!]$ définissant une liste des $s_k$ premiers segments consécutifs de la séquence de segments constituant le contenu ;
- le nombre $s_k$ de segments est croissant avec le niveau k;
- les équipements clients sont classés en L niveaux, chaque niveau $k \in [\![1, L]\!]$ définissant une liste de segments correspondant à une durée minimale $t_k$ du contenu ;
- l'étape (b) consiste à identifier et à affecter au nouvel équipement client le plus petit niveau $k \in [\![1, L]\!]$ tel que $\forall i \in [\![k + 1, L]\!]$, $n_i > C * n_{i-1}$, où $n_i$ désigne le nombre d'équipements client du réseau pair à pair associé au niveau i ;

- C est un coefficient fonction de l'état du réseau calculé par le serveur de gestion des pairs ;
- le contenu est diffusé en direct, la séquence de segments constituant le contenu étant mise à jour à intervalle régulier de telle sorte qu'à chaque mise à jour le premier segment de la séquence est supprimé, et un nouveau segment est ajouté à la fin de la séquence ;
- chaque liste minimale de segments du contenu définissant un niveau est mise à jour en conséquence à chaque mise à jour de la séquence de segments constituant le contenu ;
- un équipement client présente un retard de lecture du contenu par rapport au nouvel équipement client, l'étape (c) comprenant la diminution du niveau affecté audit équipement en retard ;
- l'étape (c) comprend un échange de niveau entre le nouvel équipement client et un autre équipement client de niveau différent ;
- est calculé pour chaque équipement client de niveau différent au nouvel équipement client et le nouvel équipement client une heuristique, le nouvel équipement client échangeant de niveau avec un autre équipement client de niveau différent si l'heuristique de l'équipement client de niveau le plus élevé est inférieure à l'heuristique de l'équipement client de niveau le plus fiable ;
- le calcul de l'heuristique d'un équipement client comprend des étapes de :

- Initialisation de l'heuristique $H$ de l'équipement client à une valeur moyenne ;
- Mise à jour régulière de l'heuristique $H$ de l'équipement client en fonction d'un compteur de segments reçus et d'un compteur de requêtes expirées pour ledit équipement client ;

- le procédé comprend à chaque mise à jour de la séquence de segments :

- si chaque segment du contenu appartenant à ladite liste de segments du contenu correspondant au niveau affecté au nouvel équipement client est présent dans la mémoire tampon du nouvel équipement client, diminution du niveau affecté au nouvel équipement tant que le ledit niveau reste au-dessus d'un niveau minimum,
- si au moins un segment du contenu appartenant à ladite liste de segments du contenu correspondant au niveau affecté au nouvel équipement client est absent de la mémoire tampon du nouvel équipement client, affectation au nouvel équipement d'un niveau maximum.

Selon un deuxième et un troisième aspect, l'invention concerne respectivement un produit programme d'ordinateur, comme décrit dans la revendication 14, comprenant des instructions de code pour l'exécution d'un procédé selon le premier aspect de l'invention de diffusion d'un contenu en streaming dans un réseau pair à pair d'équipements client connecté à un serveur de contenu ; et un moyen de stockage lisible par un équipement informatique, comme décrit dans la revendication 15, sur lequel un produit programme d'ordinateur comprend des instructions de code pour l'exécution d'un procédé selon le premier aspect de l'invention de diffusion d'un contenu en streaming dans un réseau pair à pair d'équipements client connecté à un serveur de contenu.

## PRESENTATION DES FIGURES

D'autres caractéristiques et avantages de la présente invention apparaîtront à la lecture de la description qui va suivre d'un mode de réalisation préférentiel. Cette description sera donnée en référence aux figures annexées dont :

- la figure 1 représente une architecture pour la mise en oeuvre du procédé selon l'invention ;
- la figure 2 illustre des niveaux de priorité utilisés dans un mode de réalisation du procédé selon l'invention.

## DESCRIPTION DETAILLEE

### Architecture

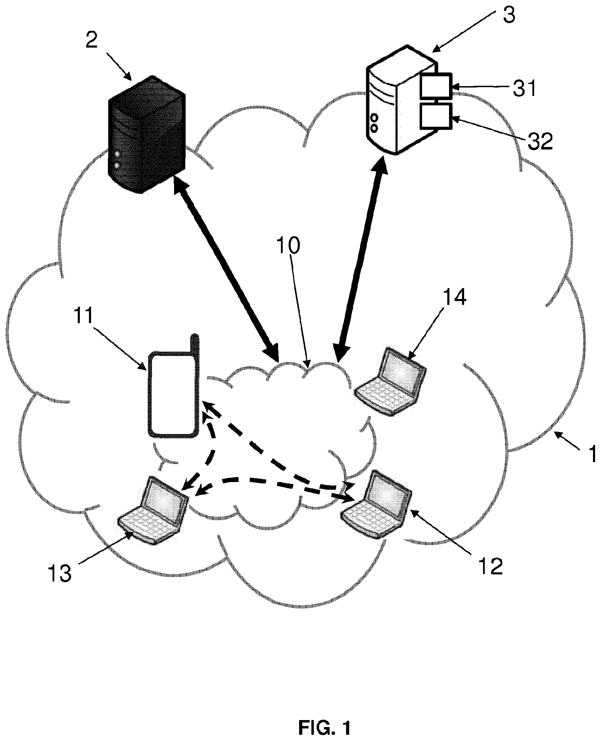

En référence à la figure 1, l'invention propose un procédé de diffusion d'un contenu en streaming dans un réseau 1 tel que représenté. Le réseau 1 est ici un réseau de télécommunications à grande échelle et en particulier Internet. Ce réseau 1 comprend un réseau pair-à-pair 10 d'équipements client 11, 12, 13 (auquel on verra qu'un nouvel équipement client 14 du même type va se rajouter). Chaque équipement client 11, 12, 13 est typiquement un équipement informatique personnel tel qu'un smartphone, un PC, une tablette, etc. connectée au réseau 1, disposant de moyens de traitement de données tels qu'un processeur, d'une interface pour la lecture du contenu, et disposant d'un mémoire tampon (appelée également « buffer »), typiquement une zone d'une mémoire vive, pouvant stocker comme l'on va voir tout ou partie du contenu de façon temporaire (par temporaire, on entend que les segments sont supprimés de cette mémoire peu de temps après qu'ils aient été lus : il ne sont pas stocké à long terme comme c'est le cas pour un téléchargement direct).

Comme expliqué dans l'introduction, ces équipements 11, 12, 13 sont des « pairs » (appelés également « noeuds ») du réseau pair-à-pair 10.

Par « équipements client 11, 12, 13 d'un réseau pair-à-pair 10 » on entend des équipements connectés dans le réseau 1 par un protocole réseau pair-à-pair. En d'autres termes, les moyens de traitement de données de chaque pair mettent en oeuvre un programme particulier (logiciel client), qui peut être intégré à un navigateur web, pour l'utilisation du pair-à-pair.

En effet, un réseau pair-à-pair, ou « peer-to-peer » ou encore P2P, est un sous-réseau décentralisé au sein du réseau 1, dans lequel des données peuvent être transférées directement entre deux équipements client 11, 12, 13 du réseau 10, sans transiter par un serveur central. Il permet ainsi à tous les équipements client 11, 12, 13 de jouer à la fois le rôle de client et serveur. Les pairs 11, 12, 13 sont ainsi définis comme des « seeders » (en français les « semeurs », c'est-à-dire des fournisseurs de données) et/ou des « leechers » (en français les « sangsues », c'est-à-dire des receveurs de données).

Ledit contenu, qui est en particulier un contenu audio ou vidéo, c'est-à-dire un média d'une certaine durée, est constitué d'une séquence de segments (dite « liste de lecture », en anglais « playlist ») stockés sur des moyens de stockage de données d'un serveur 2 connecté au réseau pair-à-pair 10. Les segments ont une longueur prédéterminée, typiquement une ou deux secondes du contenu, mais elle peut aller d'une fraction de seconde à une dizaine de secondes. Tous les segments d'un contenu donné ont généralement la même longueur. Comme l'on verra plus tard, il est possible par commodité de définir les segments d'un contenu par les temps de contenu associé, ce qui permet de s'affranchir de la notion de longueur d'un segment. Par exemple, dans un cas où les segments feraient deux secondes, si l'on parle des « quatre premières secondes du contenu », on parle des deux premiers segments.

Le serveur 2 est un serveur de contenu. En d'autres termes, il s'agit d'un (ou plusieurs) serveurs du réseau internet 1 mettant à disposition les segments de divers contenus conformément à un protocole de streaming donné. On citera par exemple l'exemple de HLS (« HTTP Live Streaming »), dans lequel les segments sont des fichiers « ts », listés dans un fichier playlist « m3u8 ». HLS implique le format MPEG2 pour le contenu. On citera également les protocoles de streaming DASH, Smooth streaming, ou HDS.

Le serveur 2 est la source primaire des segments, dans la mesure où initialement aucun pair ne dispose du contenu (avant un premier transfert du serveur 2 vers ce pair 11, 12, 13). Les contenus sont soit dès l'origine stockés dans leur intégralité sur le serveur 2 (cas de la VOD, « Video On Demand » i.e. vidéo à la demande, ou de la vidéo en temps différé), soit générés en temps réel (cas du live streaming, ou streaming en direct), et dans ce dernier cas la liste de segments qui les constitue évolue dynamiquement.

Plus précisément, dans ce dernier cas (live streaming), le contenu doit plutôt être vu comme un flux en continu. La séquence de segments est ainsi dynamique, c'est-à-dire qu'elle est mise à jour régulièrement. A chaque fois qu'un nouveau segment est généré il est ajouté en fin de la séquence, et le premier segment de la séquence (le plus ancien) est supprimé. Tous les autres se décalent selon un mécanisme de roulement que l'on peut apparenter à une liste FIFO. Le premier segment de la liste (le plus ancien) peut être celui au niveau du point de lecture, en d'autre termes le segment « en direct » (et donc les segments sont supprimés de la liste de lecture dès qu'ils sont lus), ou un segment « passé » si le serveur de contenu accepte qu'on lise le contenu avec du retard (certaines plateformes proposent du live streaming avec jusqu'à 2h de retard). On note que des listes de lectures dynamiques peuvent aussi être utilisées pour de la VOD.

Dans la suite de la présente demande, on prendra le mode de réalisation préféré dans lequel la liste de lecture est dynamique (exemple du live streaming), et on supposera qu'à tout instant le premier segment de la séquence est le « prochain » segment qui sera lu, le deuxième segment est le deuxième prochain qui sera lu, etc., et le dernier segment de la séquence est celui dont l'existence est la plus récente, et qui sera lu lorsque tous les autres segments de la séquence auront été lus et qu'il sera devenu le premier (à ce moment-là d'autres nouveaux segments auront complété la séquence en remplacement de tous ceux qui auront déjà été lus). Alternativement, la liste des segments est statique.

Est également connecté au réseau pair-à-pair 10 un serveur de gestion de pairs 3 appelé « tracker ». Le tracker 3 présente des moyens de traitement de données 31 et des moyens de stockage 32. Il coordonne les échanges entre pairs 11, 12, 13 (en contrôlant le logiciel client mis en oeuvre par chacun des équipements client 11, 12, 13), mais il n'est pas directement impliqué dans le transfert de données et ne possède pas de copie du fichier.

En revanche, il communique avec le serveur de contenu 2. Pour chacun des contenus stockés sur ce serveur 2, le tracker 3 reçoit (sur requête ou par push) du serveur 2 un fichier « manifeste » pour chacun des contenus. Ce fichier manifeste est un descriptif du contenu (au format XML pour la plupart des protocoles de streaming sauf HLS), et contient notamment la liste des segments. Le tracker 3 analyse alors le manifeste (par « parsing », i.e. analyse syntaxique) de sorte à extraire la liste des segments.

Dans le cas du live streaming, le manifeste est en général réémis à intervalle régulier de sorte à permettre une mise à jour de la liste de lecture (on rappelle que comme le contenu est généré en direct en permanence des segments nouveaux entrent dans la liste de lecture et d'autres la quittent quand ils sont devenus trop anciens et ont dépassé le point de lecture). Alternativement, est fourni un squelette de manifeste (c'est-à-dire sans la liste des segments) accompagné d'indications temporelles (dont un horodatage, en anglais « timestamp ») permettant de déterminer quand chaque nouveau segment est émis, ce qui permet au tracker 3 (et aux équipements clients 11, 12, 13, 14, comme l'on verra plus loin) de compléter ce squelette et de le mettre à jour tout seul.

Pour chaque manifeste (obtenu complet ou dont la liste de lecture a été automatiquement complété), le tracker 3 réalise un « hash », c'est-à-dire met en oeuvre une fonction de hachage de sorte à obtenir une empreinte du manifeste, qui constitue une signature du contenu auquel le manifeste est associé, et dont on verra l'utilité plus loin. Il est à noter que le hash peut être mis en oeuvre sur l'adresse du manifeste (son URL, « Uniform Resource Locator»), ce qui est intéressant puisqu'une URL reste constante même si le manifeste change régulièrement (du fait du live streaming).

*Connexion d'un nouvel équipement client au réseau pair-à-pair*

Dans la suite de la présente description, on suppose que le réseau pair-à-pair comprend au moins un équipement client 11, 12, 13 comprenant déjà sur sa mémoire tampon au moins un segment du contenu à diffuser, et qu'un nouvel équipement 14 (sur la mémoire tampon duquel aucun segment du contenu n'est encore disponible) se connecte au réseau pair-à-pair 10 dans une étape (a), en vue de récupérer un contenu donné.

Dans le cas contraire, si le réseau pair-à-pair 10 ne comprenait aucun équipement client 11, 12, 13 ou qu'aucun de ces équipements ne disposait du moindre segment du contenu (en d'autre termes que le nouvel équipement 14 était le premier à désirer consulter ce contenu), alors le nouvel équipement n'aurait pas d'autre choix que de récupérer le contenu intégralement depuis le serveur de contenu 2 (puisqu'il n'est disponible nulle part ailleurs).

Dans le cas où au moins un segment est déjà disponible, on va voir comment le contenu se diffuse.

De façon connue, le nouvel équipement client 14 se connecte au serveur de contenu 2 et sélectionne le contenu dont il souhaite la lecture (comme expliqué, on suppose qu'on se place dans un cas de live streaming et donc que le contenu est généré en direct).

Le serveur 2 transmet au client le manifeste du contenu, et ce client met en œuvre le parsing pour obtenir la liste (actuelle) des segments de la séquence. De façon préférée, l'étape (a) comprend ensuite directement (c'est-à-dire avant d'établir un éventuel transfert pair-à-pair) la transmission audit nouvel équipement client 13 depuis le serveur 2 d'au moins un premier (selon la séquence) segment du contenu, en d'autres termes le prochain à être lu. Cela permet à l'utilisateur de commencer la lecture du contenu au plus vite pour un maximum de confort. Il peut être prévu une durée minimale de préchargement, par exemple dix secondes (soit cinq segments de deux secondes). Cette transmission est effectuée sur requête de l'équipement client 14.

Pendant ce temps, le nouvel équipement client 14 réalise le hash du manifeste et envoie l'empreinte associée au tracker 3. Celui-ci la compare avec celles dont il dispose, et identifie ainsi le contenu associé, de sorte à initier des transferts de segments entre équipements clients 11, 12, 13, 14.

*Niveaux de priorité*

Dans l'art antérieur, il est connu de récupérer les segments depuis le serveur de contenu 2 ou d'autres équipements 11, 12, 13 selon une règle donnée : si suffisamment de segments d'avance sont stockés dans la mémoire tampon du nouvel équipement client 14, alors on privilégie un transfert entre équipements du réseau pair-à-pair 10, sinon on sollicite un transfert depuis le serveur 2.

Cela rejoint le mécanisme de préchargement évoqué précédemment : l'équipement 14 fait en sorte d'avoir toujours une durée minimale prédéterminée du contenu stockée sur la mémoire tampon, par exemple dix secondes (soit cinq segments de deux secondes). Cette durée minimale est appelée la marge de criticité.

Cela permet théoriquement à l'utilisateur un confort maximal. Toutefois, on constate que lorsqu'un segment est trop rare, de nombreux équipements vont se trouver simultanément à devoir le charger depuis le serveur 2, qui va être saturé en upload et incapable de le servir suffisamment vite à tout le monde, ce qui résultera dans des blocages de la lecture du contenu pour de nombreux utilisateurs.

Ceci est particulièrement susceptible de survenir en live streaming, puisque d'une part la lecture est synchronisée (tous les utilisateurs lisent les mêmes segments en même temps), et d'autre part la marge de criticité ne peut être que très courte (comme expliqué la liste de lecture ne contient au maximum que quelques dizaines de segments).

En cas de saturation du serveur 2, les utilisateurs devront patienter le temps que leur équipement « rebufferise » suffisamment de segments, ce qui est très gênant dans la mesure où des utilisateurs peuvent constater des saccades, voire une interruption totale de lecture pendant plusieurs secondes, ce qui est très gênant lors de la diffusion d'un contenu en direct (on peut imaginer la colère d'un utilisateur qui manquerait un but lors d'un match de football).

Le présent procédé de diffusion d'un contenu en streaming dans le réseau pair à pair 10 se distingue en ce qu'il propose de générer de façon contrôlée un décalage entre les téléchargements serveur de différents équipements clients 11, 12, 13, 14 pour faciliter la diffusion des segments entre pairs.

Ce décalage est obtenu via l'affectation aux pairs dans une étape (b) (qui est mise en oeuvre de façon préférée par le tracker 3 et qui sera décrite plus en détail plus loin) de « niveaux de priorité », chacun définissant une liste minimale de segments du contenu devant être stockés par la mémoire tampon de l'équipement 11, 12, 13, 14. Plus précisément les segments de cette liste sont récupérés depuis le serveur 2 s'ils sont manquants. On comprendra que ces « niveau de priorité » n'ont rien à voir avec les « niveaux de distribution/proximité » que l'on peut voir dans certaines architectures connues, et qui désignent typiquement un nombre de sauts ente le pair et le serveur de contenu. En particulier, le serveur envoie aux pairs de niveaux 1, qui envoient aux pairs de niveau 2, etc. En cas d'absence de réponse à des requêtes de segments, sont successivement consultés les pairs de niveau de plus en plus faible, jusque au serveur (qui peut être vu comme l'équipement de « niveau 0 »). Par rapport au présent procédé, les niveaux de distribution n'ont aucun impact sur le fonctionnement de la mémoire tampon des pairs.

En d'autres termes, le présent procédé comprend une étape (c) de transmission (toujours sur requête de l'équipement client 14 : c'est lui qui identifie les segments manquants qu'il doit avoir sur sa mémoire tampon, et les demande au serveur 2) audit nouvel équipement client 14 depuis le serveur 2 d'au moins chaque segment du contenu qui :

- soit absent de la mémoire tampon du nouvel équipement client 14, et qui
- appartienne à ladite liste de segments du contenu correspondant au niveau affecté au nouvel équipement client 14.

Les autres segments sont si possible récupérés depuis des pairs, c'est-à-dire que l'étape (c) consiste préférentiellement en la transmission (toujours sur requête de l'équipement client 14) audit nouvel équipement client 14 de chaque segment du contenu absent de la mémoire tampon du nouvel équipement client 14 :

- depuis le serveur 2 si le segment appartient à ladite liste de segments du contenu correspondant au niveau affecté au nouvel équipement client 14 ;
- depuis des équipements clients 11, 12 associés à un niveau supérieur au niveau affecté audit nouvel équipement client 14 sinon (i.e. transmission d'au moins un segment du contenu absent de la mémoire tampon du nouvel équipement client 14, qui n'appartienne pas à ladite liste de segments du contenu correspondant au niveau affecté au nouvel équipement client 14).

Il est à noter que dans le cadre de la récupération de segments au sein du réseau pair-à-pair 10 (i.e. depuis d'autres équipements client), le segment, qui est une unité de données vidéo, est subdivisée en sous-unités appelés « chunks » (en français « morceaux ») de taille fixe et plus petite. Une conséquence est notamment qu'on peut demander différents chunks d'un même segment à différents pairs (et donc qu'un segment peut au final provenir d'une pluralité d'équipements clients 11, 12, 13).

De façon préférée, dans l'hypothèse où on a L niveaux, chaque niveau $k \in [\![1, L]\!]$ définit une liste des $s_k$ premiers segments consécutifs du contenu (éventuellement à un décalage près), en d'autres termes les $s_k$ prochains segments qui seront lus.

Cela équivaut à des marges de criticité variables : en effet, les segments ayant généralement une durée équivalente (et souvent constante), imposer la présence de $s_k$ segments d'avance revient à imposer d'avoir $s_k$*durée_segment* secondes de contenu présent sur la mémoire tampon.

Et de façon encore préférée, le nombre $s_k$ de segments est croissant avec le niveau k. Cela fait que les équipements client 11, 12, 13, 14 avec un niveau de priorité faible n'auront à récupérer depuis le serveur 2 qu'un petit nombre de premiers segments, les autres étant récupérés depuis le réseau pair-à-pair 10, alors que ceux avec un haut niveau de priorité solliciteront davantage le serveur 2.

La conséquence est que les équipements client 11, 12, 13, 14 avec un haut niveau de priorité auront en moyenne en stock plus de segments que ceux avec un faible niveau de priorité, et qu'un transfert via le réseau pair-à-pair 10 sera possible des premiers vers les seconds. Il s'agit d'un mécanisme dit en cascade qui va favoriser la diffusion équilibrée des segments via le réseau pair-à-pair 10.

Il est à noter que l'on peut prévoir un décalage de quelques segments avec le début du contenu pour autoriser un léger décalage de « playback », c'est-à-dire une autorisation de dérive du retard de lecture (dans le cas du live streaming, cela permet d'éviter que des fragments du contenu soient manqués par l'utilisateur en cas de rebuffering : en effet, le lecteur doit normalement rattraper son retard et « saute » les segments correspondant à la période d'interruption de lecture, ce qui peut causer des erreurs. Le décalage de playback permet de reprendre la lecture là où elle s'était arrêtée en acceptant un léger retard supplémentaire, en général inférieur à un seuil prédéterminé). Le playback n'est pas à confondre avec la lecture en différée, car le premier n'est que de l'ordre de quelques secondes, est limité et n'est pas contrôlé par l'utilisateur, alors que le second peut être de plusieurs minutes voire de plusieurs heures (ce qui signifie que les segments associés seront quasiment introuvables chez les autres pairs) et mis en oeuvre sur requête de l'utilisateur.

Ainsi par exemple si l'on prend les $s_k$ premiers segments consécutifs du contenu après le j-ième, on aura le j+1-ième, le j+2-ième... le j+k-ième. Un tel cas revient à définir une sous-playlist correspondant à la playlist décalée, l'homme du métier saura comment adapter l'invention à un tel cas.

Par ailleurs, comme expliqué précédemment, par commodité on peut parler en « temps » de contenu plutôt qu'en nombre de segments (on passe de l'un à l'autre en multipliant par la durée d'un segment). Ainsi chaque niveau $k \in [\![1, L]\!]$ peut définir un temps minimal $t_k$ du contenu devant être stocké par la mémoire tampon de l'équipement 11, 12, 13, 14, avec $t_k = s_k$ *durée_segment.* Si on impose un temps, le nombre de segments associés correspond à un arrondi à la valeur supérieure de ce temps divisé par la durée d'un segment.

Dans le cas du live streaming, on a montré que la séquence de segments constituant le contenu est mise à jour à intervalle régulier, ce qui signifie que les segments « changent ». Par conséquent, on comprendra bien que les segments des listes minimales sont définis par leurs rangs dans la playlist, indépendamment des données que contiennent ces segments. Par exemple, lorsque l'on parle des $s_k$ premiers segments consécutifs du contenu (i.e. le premier, le deuxième, le troisième, ..., le sk-ième) ou des $t_k$ premières secondes du contenu, comme celui-ci est généré en direct ces $s_k$ premiers segments changeront à chaque mise à jour de la séquence de segments constituant le contenu. Pourtant, de façon immuable la liste minimale contiendra les $s_k$ premiers segments « actuels » du contenu. Il n'y a donc pas de contradiction entre des listes minimales et des playlists dynamiques.

En pratique, chaque liste minimale de segments du contenu définissant un niveau est mise à jour en conséquence à chaque mise à jour de la séquence de segments constituant le contenu. Une telle mise à jour de la liste définissant un niveau peut entraîner à nouveau la nécessité pour l'équipement 14 de télécharger un segment auprès du serveur 2. On peut par exemple imaginer que pour un équipement de niveau k les $s_k$ premiers segments ont été téléchargés depuis le serveur 2, et que le $s_{k+1}$-ième est téléchargé depuis un autre équipement, mais à une vitesse plus lente que la vitesse de lecture : lors de la mise à jour de la liste de lecture, le $s_{k+1}$-ième segment entre dans la liste de lecture et doit être récupéré depuis le serveur 2 puisqu'il est manquant. On notera que l'équipement peut n'avoir qu'une partie d'un segment à récupérer depuis le serveur 2.

Dans le cas où un léger décalage de playback survient, la mise à jour la liste minimale prend en compte le décalage ajouté.

Il faut considérer que les listes minimales « croissent », c'est à dire que pour tout segment présent dans la liste du k-ième niveau, celui-ci est dans la liste du k+1ième niveau $(\forall k \in [\![1, L-1]\!], l_k \subset l_{k+1})$.

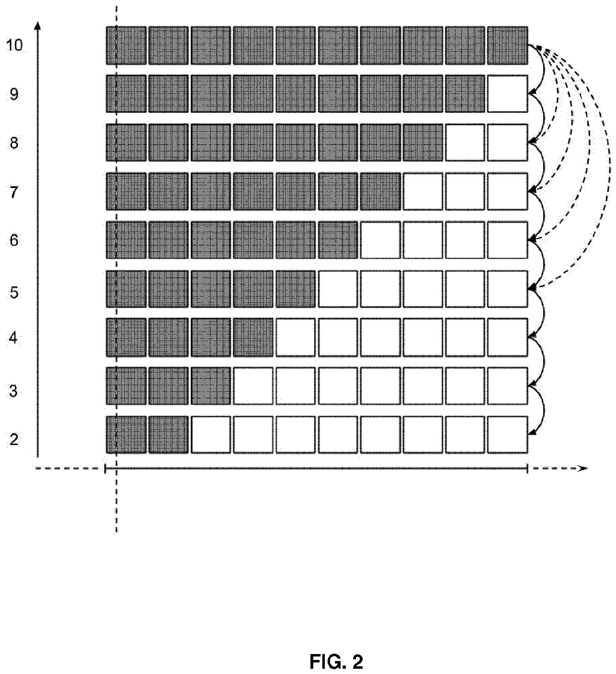

La **figure 2** représente un exemple d'organisation par niveaux (cas du live streaming), dans lequel sont représentés en grisé pour chaque niveau les segments devant être présents dans la mémoire tampon, c'est-à-dire ceux qui sont téléchargés nécessairement depuis le serveur 2 (par opposition, les segments blancs sont ceux qui peuvent être téléchargés via le réseau pair-à-pair 10). Dans ce graphique, le temps est en abscisse, la ligne en pointillés verticale matérialisant la position de lecture : lorsque le temps avance, les segments se déplacent de la droite vers la gauche. La liste de lecture présente à ce titre une taille de dix segments, et à gauche de celle-ci on trouve les segments expirés qui ont déjà été joués et retirés de la liste de lecture, alors qu'à droite de celle-ci on trouve les segments futurs qui n'ont pas encore été rajoutés. Le niveau maximal qui apparait est le niveau

10, et $s_k=k$. En d'autres termes, l'équipement de niveau 10 doit stocker au minimum 10 segments (c'est dire que dans cet exemple, un pair de niveau maximal doit stocker dans sa mémoire tampon l'intégralité de la liste de lecture), l'équipement de niveau 9 doit stocker au minimum 9 segments, etc. Cela fait que l'équipement de niveau 9 va récupérer les segments 1 à 9 depuis le serveur 2, et le segment 10 depuis un équipement de niveau 10, l'équipement de niveau 8 va récupérer les segments 1 à 8 depuis le serveur 2, et les segments 9 et 10 depuis un équipement de niveau 9 (ou plus), etc. On voit bien le caractère « en cascade » du mécanisme.

On note qu'un mode de réalisation particulièrement avantageux consiste à prendre $s_k=k+s_{min}$, où $s_{min}$ est une valeur minimale de segments. En effet, les pairs de niveau minimal (niveau 1) ont généralement plus d'un segment, en général au moins trois (i.e. $s_{min}=2$), avantageusement l'équivalent de 10s de contenu (soit $s_{min}=5$ si la durée d'un segment est deux secondes). En raisonnant sur le temps de contenu stocké, si la durée d'un segment est *durée_segment,* on a alors $t_k=k+t_{min}$ la durée minimale de contenu devant être stocké par la mémoire tampon du pair de niveau k, avec par exemple $t_{min}=10s$ comme expliqué, et $\lceil t_k/durée\_segment \rceil$ le nombre $s_k$ de segments associé. Il est à noter que la notion d'arrondi à la valeur entière supérieure est important quand la durée d'un segment est assez grande (typiquement plusieurs secondes).

En prenant l'exemple de segments de 3s en omettant la marge minimale avec $t_k=k$ (mais on comprend bien qu'il faille rajouter plus généralement autour de 10s), si on est en train de lire le premier segment de la playlist, dont le timestamp de fin se situe à 1,01s de la position de lecture (i.e. 1.99s du 1er segment ont été luées) :

- les équipements de niveau 1 doivent donc avoir le 1er segment uniquement dans la liste minimale ;
- les équipements de niveau 2, 3 et 4 doivent avoir le 1er et 2e segment du contenu dans la liste minimale (la fin du 2e segment est à 4.01s de la position de lecture) ;
- les équipements de niveau 5, 6 et 7 doivent avoir les 3 premiers segments dans la liste minimale (la fin du 3e segment est à 7.01s de la position de lecture), etc.

Une seconde plus tard :

- les équipements de niveau 1, 2 et 3 doivent avoir le 1er et 2e segment du contenu dans la liste minimale (la fin du 2e segment est à 3.01s de la position de lecture) ;
- les équipements de niveau 4, 5 et 6 doivent avoir les 3 premiers segments (la fin du 3e segment est à 6.01s de la position de lecture),

En d'autres termes seules les listes minimales des niveaux 1, 4 et 7 ont été mises à jour.

Alternativement, on peut prendre et considérer que le niveau minimal n'est pas le niveau 1, mais par exemple le niveau 2 ou 3, voire compter à partir du niveau 0. Dans la figure 2, le niveau minimal est le niveau 2, et on prendra cet exemple dans la suite de la description.

*Attribution d'un niveau*

L'efficacité du présent procédé est maximale lorsque les niveaux sont correctement et stratégiquement affectés. Par exemple, s'il y a trop de pairs de bas niveau, le phénomène de trop grande rareté d'un segment peut survenir. Similairement, s'il y a trop de pairs de haut niveau, le serveur 2 sera inutilement sollicité (et le P2P sous-exploité).

De manière générale, $n_k$ pairs du niveau k pourront fournir assez d'upload pour $n_{k-1}$ pairs du niveau k-1. Il faut donc au maximum s'approcher d'un coefficient C qui est le ratio moyen souhaitable entre le nombre de pairs $n_k$ du niveau k et le nombre pairs $n_{k-1}$ du niveau k-1.

L'étape (b) peut alors consister à identifier le plus petit niveau $k \in [\![1, L]\!]$ (où L est le niveau maximum prédéterminé) tel que $\forall i \in [\![k+1, L]\!]$, $n_i > C * n_{i-1}$, où $n_i$ désigne le nombre d'équipements client 11, 12, 13 du réseau pair à pair 10 associé au niveau i. Si la condition n'est jamais vérifiée, alors $k=L$.

En d'autres termes, les moyens de traitement 31 du tracker 3 (on verra plus loin qu'un mode d'affectation sans tracker 3 est possible, même si leur utilisation est préférée) tentent initialement d'affecter au nouvel équipement 14 le niveau maximal L en testant si $n_L \leq C * n_{L-1}$. Si ce n'est pas le cas (c'est-à-dire que $n_L > C * n_{L-1}$ et donc qu'il y a suffisamment de pairs de niveau L), les moyens de traitement 31 du tracker 3 tentent alors d'affecter au nouvel équipement 14 le niveau en-dessous L-1 en testant si $n_{L-1} \leq C * n_{L-2}$, etc. Si arrivé à l'avant-dernier niveau (i.e. le niveau 3 si le niveau minimal est le niveau 2) la condition n'est pas vérifiée (i.e. $n_3 > C * n_2$), le niveau minimal (le niveau 2 dans notre exemple) est affecté à l'équipement 14.

C, qui désigne comme expliqué le ratio cible d'équipements en passant d'un niveau au suivant, est un coefficient fonction de l'état du réseau 1 calculé par le tracker 3. Il peut être calculé selon la zone géographique, la nature du serveur 2, etc. De façon préférée, le tracker 3 interroge les équipements 11, 12, 13, 14 pour connaitre le pourcentage de téléchargement effectué en P2P, et modifie C en conséquence. En pratique, *C* peut être un coefficient proche de 1 par valeur inférieure, par exemple 0.95, ce qui traduit que les pairs avec des niveaux élevés restent moins nombreux que ceux avec un niveau bas.

Dans un exemple à 2 niveaux avec C=1 on pourrait avoir deux pairs de niveau 3, et un pair de niveau 2. En supposant que les équipements 11 et 12 sont de niveau 3 et que l'équipement 13 est de niveau 2 l'équipement 14 se verrait affecter le niveau 2 puisque la condition $n_3(= 2) \leq C * n_2(= 1 * 1)$ n'est pas vérifiée, c'est-à-dire qu'il y a assez de pairs de niveau 3, et le nouvel équipement 14 se voit affecter le niveau minimal (le niveau 2).

Alternativement, un niveau arbitraire (par exemple le niveau maximum) peut être affecté au nouvel équipement client 14, et des modifications ultérieures de ce niveau surviennent (on verra ce cas plus en détail ci-après), même si l'affectation initiale d'un niveau « stratégique » est préférée.

Il est à noter que si la mise en oeuvre d'un décalage de playback est autorisée, deux équipements de même niveau peuvent ne pas devoir télécharger le même segment (en termes de « données » et non de rang) exactement en même temps (puisqu'on raisonne par rapport à la position de lecture, qui diffère selon le décalage dû au playback).

De façon avantageuse, on tient ainsi compte du temps de décalage (par exemple exprimé en segments) dans l'attribution et le cas échéant l'évolution du niveau d'un équipement. Par exemple, on peut affecter à un nouvel équipement 14 ayant peu ou pas de décalage un niveau plus élevé pour encore accroitre le décalage avec des équipements plus en retard, qui seront réaffectés à des niveaux plus faibles.

*Echange de niveaux*

Le réseau pair-à-pair 10 évolue en permanence au gré des connexions et déconnexions d'équipements client 11, 12, 13, 14. La connexion de nouveaux équipements permet normalement de réguler la population de chacun des niveaux, mais on comprend que tous les équipements clients ne sont pas égaux et qu'il est souhaitable dans l'intérêt du réseau pair à pair 10 que certains (par exemple ceux avec une capacité d'upload élevée) plus que d'autres soient associés à un niveau élevé.

Ainsi, de façon avantageuse l'étape (c) comprend un échange de niveau entre le nouvel équipement client 14 et un autre équipement client 11 de niveau différent.

Dans l'exemple évoqué précédemment, l'équipement 14 présente le niveau 2 alors que l'équipement 11 est de niveau supérieur (niveau 3). Or, comme l'on voit sur la figure 1, il s'agit d'un smartphone (dont la connexion est susceptible d'être limitée). L'inversion des niveaux est ainsi souhaitable. On note qu'une telle inversion ne change pas les populations, mais place juste les « meilleurs » pairs aux niveaux les plus élevés, c'est-à-dire les niveaux dans lesquels ils seront les plus sollicités par le réseau pair-à-pair 10.

De façon préférée, le choix des inversions passe par le calcul (par le tracker 3 directement, ou par les équipements 11, 12, 13, 14) d'une « heuristique », c'est-à-dire d'un paramètre chiffré permettant d'évaluer de l'aptitude d'un pair à être de niveau élevé, en d'autres termes d'évaluer l'intérêt pour le réseau que ce pair soit de niveau élevé. Ainsi, dans une répartition optimale, l'heuristique est croissante avec le niveau. On verra plus loin des exemples variés d'heuristiques.

En particulier, est calculée pour chaque équipement client 11 de niveau différent au nouvel équipement client 14 et le nouvel équipement client 14 (en pratique tous les équipements 11, 12, 13, 14 à intervalle régulier) une heuristique $H_{11}$, $H_{14}$, le nouvel équipement client 14 échangeant de niveau avec un autre équipement client 11 de niveau différent si l'heuristique $H_{11}$ de l'équipement client de niveau le plus élevé 11 est inférieure à l'heuristique $H_{14}$ de l'équipement client de niveau le plus faible 14. En d'autres termes si l'heuristique $H_{14}$ de l'équipement 14 (de niveau 2 dans notre exemple) est supérieure à l'heuristique $H_{11}$ de l'équipement 11 (de niveau 3), alors ces derniers doivent échanger de niveaux.

Les pairs peuvent calculer leur propre heuristique $H$, mais de façon préférée chaque équipement client 11, 12, 13, 14 calcule l'heuristique H d'autres équipements 11, 12, 13, 14, en particulier de ceux qui lui fournissent des segments (ses « seeders »). Pour comparer les heuristiques H, le pair de niveau le plus haut demande avantageusement sa propre heuristique $H$ à chaque pair de niveau inférieur à qui il fournit des segments (ses « leechers »), et en calcule la moyenne.

Si le tracker 3 (ou les équipements clients 11, 12, 13, 14 eux-mêmes) constate qu'il est souhaitable que plusieurs pairs échangent avec un pair de niveau supérieur, c'est celui dont l'heuristique est maximale qui bénéficie de l'inversion. De façon générale, on comprendra que les inversions tendent à faire monter de niveau les pairs avec les meilleurs heuristiques (les plus élevées), et baisser ceux avec les heuristiques les plus mauvaises (les plus faibles).

*Heuristiques*

Comme expliqué, une première heuristique possible simple correspond à une estimation de la limite d'upload (en d'autres termes le débit montant maximum de l'équipement client).

De façon préférée, est utilisée une heuristique qui mesure « l'efficacité » du pair, en d'autres termes sa capacité à émettre de nombreux segments. *H* d'un équipement client 11, 12, 13, 14 peut ainsi être exprimé (en particulier par un autre équipement client 11, 12, 13, 14 à qui il fournit des segments, c'est-à-dire un « leecher ») en fonction d'un compteur de segments (éventuellement exprimé en nombre de morceaux de segments, les « chunks ») émis (vers le pair calculant l'heuristique H de l'équipement client 11, 12, 13, 14 « seeder») et d'un compteur de requêtes expirées (i.e. des « timeouts ») pour ledit équipement client 11, 12, 13, 14, en particulier par la formule *(compteur de segments émis)/(compteur de segments émis + compteur de requêtes expirées).* On note que le dénominateur correspond au nombre de requêtes de segments (ou morceaux de segments) reçues par le pair dont on calcule l'heuristique H depuis le pair qui calcule l'heuristique *H*.

Cette formule apporte satisfaction, mais on comprend qu'un pair ayant servi 200/250 morceaux de segments devrait avoir une heuristique supérieure à celui qui en a servi 3/3.

Pour ça, le calcul de l'heuristique *H* d'un équipement client 11, 12, 13, 14 peut comprendre des étapes de :

- Initialisation de l'heuristique *H* de l'équipement client 11, 12, 13, 14 à une valeur moyenne (en particulier 0.5) ;
- Mise à jour régulière (par exemple toutes les secondes, ou à chaque apparition d'un nouveau segment) de l'heuristique *H* de l'équipement client 11, 12, 13, 14 en fonction d'un compteur de segments (ou morceaux de segments) émis et d'un compteur de requêtes expirées (i.e. des « timeouts ») pour ledit équipement client 11, 12, 13, 14.

Plus précisément, *H* peut être défini récursivement. En notant $H_{new}$ et $H_{old}$ les nouvelles et anciennes valeurs de l'heuristique et *h* le ratio *(compteur de segments émis)/(compteur de segments émis + un compteur de requêtes expirées)*, on a $H_{new} = f(H_{old}, h)$.

La relation peut être une combinaison linéaire : en définissant un poids p (0<p<1) permettant de tenir compte des conditions passées sur le réseau pair-à-pair 10 (et éventuellement du nombre global de requêtes de segments effectuées auprès de l'équipement 11, 12, 13, 14 pour lequel on cherche à calculer l'heuristique), l'heuristique peut être obtenue par la formule $H_{new} = p * h + (1 - p) * H_{old}$.

Cet algorithme permet de converger vers une valeur optimale de nombre de requêtes de segments pour chaque équipement client 11, 12, 13, 14: on demande plus de segments aux pairs les plus efficaces (ils ont une bonne heuristique donc leur niveau monte). Si leur débit sortant (upload) sature, ils n'arriveront pas à satisfaire toutes les requêtes, dont un certain nombre expirera, d'où une baisse de *h* et par conséquent de l'heuristique et donc du niveau. Moins de segments leur seront alors demandés.

Il est à noter qu'un équipement 11, 12, 13, 14 peut dans certaines conditions ne plus tenir compte de l'heuristique calculée lorsqu'elle n'est plus pertinente, (et le niveau du pair devient minimal, ce qui correspond à un nombre minimal fixe de segments dans la liste de lecture). Dans certains cas on peut se permettre de donner à l'équipement 11, 12, 13, 14 n'utilisant plus l'heuristique un niveau un peu plus élevé pour éviter des événements de « rebuffering », c'est-à-dire d'interruption le temps que des segments manquants soient récupérés depuis le serveur 2.

Ce phénomène peut être souhaitable par exemple si l'utilisateur souhaite la lecture du contenu avec du retard sur le reste des pairs (lecture différée), dans la mesure où il ne stockera pas les segments « contemporains » dont les autres pairs ont besoin. Il n'est ainsi plus nécessaire d'introduire artificiellement un décalage entre les téléchargements serveur de différents équipements clients 11, 12, 13, 14 pour faciliter la diffusion des segments entre pairs.

Certains serveurs de contenus 2 en live streaming acceptent ainsi du retard (aujourd'hui jusqu'à 8h, en général entre 20 min et une heure), i.e. la liste de lecture ne s'arrête pas au point de lecture et les segments passés ne sont supprimés qu'au bout d'un moment, ce qui autorise la lecture en décalé.

On note que le pair en lecture différée peut toujours récupérer des données via le réseau pair-à-pair 10 depuis les pairs en lecture différée qui sont devant lui, ainsi que ceux effectuant la lecture en direct s'il n'a pas trop de retard de lecture.

*Niveaux glissants*

Alternativement, un mode de gestion de priorité moins calculatoire est possible, il s'agit du mode par niveaux glissants, ou « roulement ». Il peut s'avérer moins optimal que les modes de réalisation décrits dans la partie précédente, mais il est efficace et ne nécessite pas forcément le recours au tracker 3. En effet, ce sont les équipements clients eux-mêmes qui peuvent gérer l'évolution des niveaux.

Dans ce mode, après la première affectation d'un niveau au nouvel équipement 14 (soit par le tracker 3, soit de façon préférée arbitrairement par l'équipement client 14 lui-même : en particulier le niveau maximum), à chaque nouveau segment dans la liste de lecture (i.e. à chaque mise à jour dynamique de la séquence de segments) le niveau décroît, sous réserve que l'on reste au-delà d'un seuil minimal (ce seuil correspond à une durée minimale prédéterminée du contenu devant être stockée sur la mémoire tampon de chaque équipement), qui peut correspondre au niveau 2 de notre exemple (le plus bas). Alternativement un seuil fonction d'une heuristique peut être fixé, similairement à ce qui a été évoqué précédemment.

Quel que soit son niveau, dès lors où un segment doit être téléchargé du serveur 2, le pair se voit à nouveau affecter le niveau maximum, ce qui le force à remplir à nouveau sa mémoire tampon depuis le serveur 2. A partir de là le niveau va recommencer à descendre, d'où le roulement.

Pour reformuler, à chaque mise à jour de la séquence de segments :

- si chaque segment du contenu appartenant à ladite liste de segments du contenu correspondant au niveau affecté au nouvel équipement client 14 est présent dans la mémoire tampon du nouvel équipement client 14 (i.e. que la liste minimale de segments est respectée), diminution du niveau affecté au nouvel équipement 14 tant que le ledit niveau reste au-dessus d'un niveau minimum (dans notre exemple le niveau 2),

- si au moins un segment du contenu appartenant à ladite liste de segments du contenu correspondant au niveau affecté au nouvel équipement client 14 est absent de la mémoire tampon du nouvel équipement client 14 (i.e. au moins un segment doit être téléchargé du serveur 2), affectation au nouvel équipement 14 d'un niveau maximum (le niveau 10 dans notre exemple).

*Produit programme d'ordinateur*

Selon d'autres aspects, l'invention concerne un produit programme d'ordinateur comprenant des instructions de code pour l'exécution (sur des moyens de traitement de données, en particulier ceux de l'équipement client 14) d'un procédé selon le premier aspect de l'invention de diffusion d'un contenu en streaming dans un réseau pair à pair 10 d'équipements client 11, 12, 13 connecté à un serveur de contenu 2, ainsi que des moyens de stockage lisibles par un équipement informatique (par exemple une mémoire de cet équipement client 14) sur lequel on trouve ce produit programme d'ordinateur.

**Revendications**

1. Procédé de diffusion d'un contenu en streaming dans un réseau pair à pair (10) d'équipements clients (11, 12, 13) connecté à un serveur de contenu (2), ledit contenu étant constitué d'une séquence de segments stockés sur des moyens de stockage de données du serveur de contenu (2), chaque équipement client (11, 12, 13) comprenant une mémoire tampon stockant de façon temporaire au moins un segment dudit contenu, le procédé étant **caractérisé en ce que** chaque équipement client (11, 12, 13) est associé à un niveau, les équipements clients (11, 12, 13, 14) étant classés en L niveaux, chaque niveau $k \in [\![1, L]\!]$ définissant une liste minimale de segments du contenu correspondant à une durée minimale $t_k$ du contenu et devant être stockés par la mémoire tampon de l'équipement (11, 12, 13), les listes minimales croissant avec le niveau k, le procédé comprenant des étapes de :

    (a) Connexion d'un nouvel équipement client (14) au réseau pair-à-pair (10) ;
    (b) Affectation d'un niveau au nouvel équipement client (14) en fonction du nombre d'équipements clients (11, 12, 13) associés à chaque niveau ;
    (c) Transmission audit nouvel équipement client (14) depuis le serveur (2) d'au moins chaque segment du contenu absent de la mémoire tampon du nouvel équipement client (14), qui appartienne à ladite liste de segments du contenu correspondant au niveau affecté au nouvel équipement client (14).

2. Procédé selon la revendication 1, dans lequel l'étape (c) comprend la transmission audit nouvel équipement client (14) depuis des équipements clients (11) associés à un niveau supérieur au niveau affecté audit nouvel équipement client (14) d'au moins un segment du contenu absent de la mémoire tampon du nouvel équipement client (14), qui n'appartienne pas à ladite liste de segments du contenu correspondant au niveau affecté au nouvel équipement client (14).

3. Procédé selon l'une des revendications 1 et 2, dans lequel le réseau pair à pair (10) est en outre connecté à un serveur de gestion de pairs (3) configuré pour gérer la transmissions de segments entre équipements client (11, 12, 13, 14), l'étape (b) étant mise en oeuvre par le serveur de gestion de pairs (3).

4. Procédé selon l'une des revendications 1 à 3, dans lequel l'étape (a) comprend directement la transmission audit nouvel équipement client (13) depuis le serveur (2) d'au moins un premier segment du contenu.

5. Procédé selon l'une des revendications 1 à 4, dans lequel l'étape (b) consiste à identifier et à affecter au nouvel équipement client (14) le plus petit niveau $k \in [\![1, L]\!]$ tel que $\forall i \in [\![k + 1, L]\!]$, $n_i > C * n_{i-1}$, où $n_i$ désigne le nombre d'équipements client (11, 12, 13) du réseau pair à pair (10) associé au niveau i.

6. Procédé selon la revendication 5, dans lequel C est un coefficient fonction de l'état du réseau (1) calculé par un serveur de gestion des pairs (3).

7. Procédé selon l'une des revendications 1 à 6, dans lequel le contenu est diffusé en direct, la séquence de segments constituant le contenu étant mise à jour à intervalle régulier de telle sorte qu'à chaque mise à jour le premier segment de la séquence est supprimé, et un nouveau segment est ajouté à la fin de la séquence.

8. Procédé selon la revendication 7, dans lequel chaque liste minimale de segments du contenu définissant un niveau est mise à jour en conséquence à chaque mise à jour de la séquence de segments constituant le contenu.

9. Procédé selon l'une des revendications 7 et 8, dans lequel un équipement client (11, 12, 13) présente un retard de lecture du contenu par rapport au nouvel équipement client (14), l'étape (c) comprenant la diminution du niveau affecté audit équipement (11, 12, 13) en retard.

10. Procédé selon l'une des revendications 1 à 9, dans lequel l'étape (c) comprend un échange de niveau entre le nouvel équipement client (14) et un autre équipement client (11) de niveau différent.

11. Procédé selon la revendication 10, dans lequel est calculé pour chaque équipement client (11) de niveau différent au nouvel équipement client (14) et le nouvel équipement client (14) une heuristique ($H_{11}$, $H_{14}$), le nouvel équipement client (14) échangeant de niveau avec un autre équipement client (11) de niveau différent si l'heuristique ($H_{11}$) de l'équipement client de niveau le plus élevé (11) est inférieure à l'heuristique ($H_{14}$) de l'équipement client de niveau le plus faible (14).

12. Procédé selon la revendication 11, dans lequel le calcul de l'heuristique H d'un équipement client (11, 12, 13, 14) comprend des étapes de :

   - Initialisation de l'heuristique $H$ de l'équipement client (11, 12, 13, 14) à une valeur moyenne ;
   - Mise à jour régulière de l'heuristique $H$ de l'équipement client (11, 12, 13, 14) en fonction d'un compteur de segments reçus et d'un compteur de requêtes expirées pour ledit équipement client (11, 12, 13, 14).

13. Procédé selon l'une des revendications 8 et 9, comprenant à chaque mise à jour de la séquence de segments :

   - si chaque segment du contenu appartenant à ladite liste de segments du contenu correspondant au niveau affecté au nouvel équipement client (14) est présent dans la mémoire tampon du nouvel équipement client (14), diminution du niveau affecté au nouvel équipement (14) tant que le ledit niveau reste au-dessus d'un niveau minimum,
   - si au moins un segment du contenu appartenant à ladite liste de segments du contenu correspondant au niveau affecté au nouvel équipement client (14) est absent de la mémoire tampon du nouvel équipement client (14), affectation au nouvel équipement (14) d'un niveau maximum.

14. Produit programme d'ordinateur comprenant des instructions de code pour l'exécution d'un procédé selon l'une des revendications 1 à 13 de diffusion d'un contenu en streaming dans un réseau pair à pair (10) d'équipements client (11, 12, 13) connecté à un serveur de contenu (2), lorsque ledit programme est exécuté par un ordinateur.

15. Moyen de stockage lisible par un équipement informatique sur lequel un produit programme d'ordinateur comprend des instructions de code pour l'exécution d'un procédé selon l'une des revendications 1 à 13 de diffusion d'un contenu en streaming dans un réseau pair à pair (10) d'équipements client (11, 12, 13) connecté à un serveur de contenu (2).

**Patentansprüche**

1. Verfahren zur Ausstrahlung eines Contents durch Streaming in einem Peer-to-Peer-Netzwerk (10) von Kundenausrüstungen (11, 12, 13), das mit einem Contentserver (2) verbunden ist, wobei der Content aus einer Sequenz von Segmenten besteht, die auf Datenspeichermitteln des Contentservers (2) gespeichert sind, wobei jede Kundenausrüstung (11, 12, 13) einen Pufferspeicher umfasst, der mindestens ein Segment des Contents temporär speichert, wobei das Verfahren **dadurch gekennzeichnet ist, dass** jede Kundenausrüstung (11, 12, 13) einem Niveau zugeordnet ist, wobei die Kundenausrüstungen (11, 12, 13, 14) in L Niveaus klassifiziert sind, wobei jedes Niveau k $\in$ [[1,$L$]] eine minimale Liste von Segmenten des Contents definiert, die einer Mindestdauer $t_k$ des Contents entsprechen und vom Pufferspeicher der Ausrüstung (11, 12, 13) gespeichert werden müssen, wobei die minimalen Listen mit dem Niveau k wachsen, wobei das Verfahren die folgenden Schritte umfasst:

   (a) Verbinden einer neuen Kundenausrüstung (14) mit dem Peer-to-Peer-Netzwerk (10);
   (b) Zuweisen eines Niveaus an die neue Kundenausrüstung (14) in Abhängigkeit von der Anzahl der jedem Niveau zugeordneten Kundenausrüstungen (11, 12, 13);
   (c) Übertragen, vom Server (2) an die neue Kundenausrüstung (14), mindestens jedes im Pufferspeicher der neuen Kundenausrüstung (14) fehlenden Segments des Contents, das entsprechend dem der neuen Kundenausrüstung (14) zugewiesenen Niveau zu der Segmentliste des Contents gehört.

2. Verfahren nach Anspruch 1, wobei Schritt (c) die Übertragung von Kundenausrüstungen (11), die einem Niveau zugeordnet sind, das höher als das der neuen Kundenausrüstung (14) zugewiesene Niveau ist, mindestens eines Segments des Contents umfasst, das im Pufferspeicher der neuen Kundenausrüstung (14) fehlt, das entsprechend dem der neuen Kundenausrüstung (14) zugewiesenen Niveau nicht zu der Segmentliste des Contents gehört, an die neue Kundenausrüstung (14).

**3.** Verfahren nach einem der Ansprüche 1 und 2, wobei das Peer-to-Peer-Netzwerk (10) ferner mit einem Peerverwaltungsserver (3) verbunden ist, der ausgelegt ist, um die Übertragung von Segmenten zwischen Kundenausrüstungen (11, 12, 13, 14) zu verwalten, wobei Schritt (b) von dem Peerverwaltungsserver (3) durchgeführt wird.

**4.** Verfahren nach einem der Ansprüche 1 bis 3, wobei Schritt (a) direkt die Übertragung mindestens eines ersten Segments des Contents vom Server (2) an die neue Kundenausrüstung (13) umfasst.

**5.** Verfahren nach einem der Ansprüche 1 bis 4, wobei Schritt (b) darin besteht, das niedrigste Niveau $k \in [[1, L]]$ zu identifizieren und der neuen Kundenausrüstung (14) zuzuweisen, z. B. $\forall i \in [[k + 1, L]]$, $n_i > C*n_{i-1}$, wobei $n_i$ die Anzahl von Kundenausrüstungen (11, 12, 13) des Peer-to-Peer-Netzwerks (10) bezeichnet, die Niveau i zugeordnet ist.

**6.** Verfahren nach Anspruch 5, wobei C ein von einem Peerverwaltungsserver (3) berechneter Koeffizient ist, der vom Zustand des Netzwerks (1) abhängt.

**7.** Verfahren nach einem der Ansprüche 1 bis 6, wobei der Content direkt ausgestrahlt wird, wobei die Segmentsequenz, die den Content bildet, in regelmäßigem Intervall aktualisiert wird, so dass bei jeder Aktualisierung das erste Segment der Sequenz gelöscht wird und am Ende der Sequenz ein neues Segment hinzugefügt wird.

**8.** Verfahren nach Anspruch 7, wobei demzufolge jede minimale Segmentliste des Contents, die ein Niveau definiert, bei jeder Aktualisierung der den Content bildenden Segmentsequenz aktualisiert wird.

**9.** Verfahren nach einem der Ansprüche 7 und 8, wobei eine Kundenausrüstung (11, 12, 13) eine Leseverzögerung des Contents in Bezug auf die neue Kundenausrüstung (14) aufweist, wobei Schritt (c) die Senkung des der verzögerten Ausrüstung (11, 12, 13) zugeordneten Niveaus umfasst.

**10.** Verfahren nach einem der Ansprüche 1 bis 9, wobei Schritt (c) einen Niveauaustausch zwischen der neuen Kundenausrüstung (14) und einer anderen Kundenausrüstung (11) mit einem anderen Niveau umfasst.

**11.** Verfahren nach Anspruch 10, wobei für jede Kundenausrüstung (11) mit einem anderen Niveau als die neue Kundenausrüstung (14) und die neue Kundenausrüstung (14) eine Heuristik $(H_{11}, H_{14})$ berechnet wird, wobei die neue Kundenausrüstung (14) das Niveau mit einer anderen Kundenausrüstung (11) mit einem anderen Niveau austauscht, wenn die Heuristik $(H_{11})$ der Kundenausrüstung mit dem höchsten Niveau (11) kleiner als die Heuristik $(H_{14})$ der Kundenausrüstung mit dem niedrigsten Niveau (14) ist.

**12.** Verfahren nach Anspruch 11, wobei die Berechnung der Heuristik H einer Kundenausrüstung (11, 12, 13, 14) folgende Schritte umfasst:

- Initialisieren der Heuristik H der Kundenausrüstung (11, 12, 13, 14) auf einen Mittelwert;
- regelmäßiges Aktualisieren der Heuristik H der Kundenausrüstung (11, 12, 13, 14) in Abhängigkeit von einem Zähler der empfangenen Segmente und einem Zähler abgelaufener Abfragen für die Kundenausrüstung (11, 12, 13, 14).

**13.** Verfahren nach einem der Ansprüche 8 und 9, der bei jeder Aktualisierung der Segmentsequenz umfasst:

- wenn jedes Segment des Contents, das entsprechend dem der neuen Kundenausrüstung (14) zugewiesenen Niveau zu der Segmentliste des Contents gehört, im Pufferspeicher der neuen Kundenausrüstung (14) vorhanden ist, Senkung des der neuen Ausrüstung (14) zugewiesenen Niveaus, solange das Niveau über einem Minimalniveau bleibt,
- wenn mindestens ein Segment des Contents, das entsprechend dem der neuen Kundenausrüstung (14) zugewiesenen Niveau zu der Segmentliste des Contents gehört, im Pufferspeicher der neuen Kundenausrüstung (14) fehlt, Zuweisung eines Maximalniveaus an die Ausrüstung (14).

**14.** Rechnerprogrammprodukt, umfassend Codebefehle für die Ausführung eines Verfahrens nach einem der Ansprüche 1 bis 13 zur Ausstrahlung eines Contents durch Streaming in einem Peer-to-Peer-Netzwerk (10) von Kundenausrüstungen (11, 12, 13), das mit einem Contentserver (2) verbunden ist, wenn das Programm von einem Rechner ausgeführt wird.

**15.** Von einer IT-Ausrüstung lesbares Speichermittel, worauf ein Rechnerprogrammprodukt Codebefehle zur Ausführung eines Verfahrens nach einem der Ansprüche 1 bis 13 zur Ausstrahlung eines Contents durch Streaming in einem Peer-to-Peer-Netzwerk (10) von Kundenausrüstungen (11, 12, 13) umfasst, das mit einem Contentserver (2) verbunden ist.

**Claims**

**1.** A method of broadcasting a content by streaming in a peer-to-peer network (10) of client devices (11, 12, 13) which is connected to a content server (2), said content consisting of a sequence of segments stored in data storage means of the content server (2), each client device (11, 12, 13) comprising a buffer storing in a temporary manner at least one segment of said content, the method being **characterised in that** each client device (11, 12, 13) is associated with a level, the client devices (11, 12, 13, 14) being classified in L levels, each level $k \in [\![1, L]\!]$ defining a minimum list of segments of the content corresponding to a minimum duration $t_k$ of the content, that have to be stored by the buffer of the device (11, 12, 13), the minimum lists increasing with the level $k$, the method comprising steps of:

> (a) connecting a new client device (14) to the peer-to-peer network (10);
> (b) assigning a level to the new client device (14) as a function of the number of client devices (11, 12, 13) associated with each level;
> (c) transmitting to said new client device (14) from the server (2) at least each segment of the content which is absent from the buffer of the new client device (14), which belongs to said list of segments of the content corresponding to the level assigned to the new client device (14).

2. The method according to claim 1, wherein step (c) comprises transmitting to said new client device (14) from client devices (11) associated with a level higher than the level assigned to said new client device (14) at least one segment of the content which is absent from the buffer of the new client device (14), which does not belong to said list of segments of the content corresponding to the level assigned to the new client device (14).

3. The method according to one of claims 1 and 2, wherein the peer-to-peer network (10) is further connected to a pair management server (3) configured to manage transmitting segments between client devices (11, 12, 13, 14), step (b) being implemented by the pair management server (3).

4. The method according to one of claims 1 to 3, wherein step (a) comprises directly transmitting to said new client device (13) from the server (2) at least one first segment of the content.

5. The method according to one of claims 1 to 4, wherein step (b) consists in identifying and assigning to the new client device (14) the smallest level $k \in [\![1, L]\!]$ such as $\forall i \in [\![k + 1, L]\!]$, $n_i > C * n_{i-1}$, where $n_i$ designates the number of client devices (11, 12, 13) of the peer-to-peer network (10) associated with the level i.

6. The method according to claim 5, wherein C is a coefficient depending on the state of the network (1) calculated by a pair management server (3).

7. The method according to one of claims 1 to 6, wherein the content is broadcast live, the sequence of segments making up the content being updated at regular intervals such that at each update, the first segment of the sequence is deleted, and a new segment is added at the end of the sequence.

8. The method according to claim 7, wherein each minimum list of segments of the content defining a level is updated accordingly at each update of the sequence of segments making up the content.

9. The method according to one of claims 7 and 8, wherein a client device (11, 12, 13) has a content playing delay with respect to the new client device (14), step (c) comprising decreasing the level assigned to said delayed device (11, 12, 13).

10. The method according to one of claims 1 to 9, wherein step (c) comprises exchanging level between the new client device (14) and another client device (11) with a different level.

11. The method according to claim 10, wherein for each client device (11) with a different level from the new client device (14) and the new client device (14), a heuristic ($H_{11}$, $H_{14}$) is calculated, the new client device (14) exchanging levels with another client device (11) with a different level if the heuristic ($H_{11}$) of the client device with the highest level (11) is lower than the heuristic ($H_{14}$) of the client device with the lowest level (14).

12. The method according to claim 11, wherein calculating the heuristic H of a client device (11, 12, 13, 14) comprises the steps of:

> - initialising the heuristic H of the client device (11, 12, 13, 14) to a mean value;
> - regularly updating the heuristic H of the client device (11, 12, 13, 14) depending on a received segment counter and a timeout counter for said client device (11, 12, 13, 14).

13. The method according to one of claims 8 and 9, comprising at each update of the sequence of segments:

> - if each segment of the content belonging to said list of segments of the content corresponding to the level assigned to the new client device (14) is present in the buffer of the new client device (14), decreasing the level assigned to the new device (14) as long as said level remains above a minimum level,

- if at least one segment of the content belonging to said list of segments of the content corresponding to the level assigned to the new client device (14) is absent from the buffer of the new client device (14), assigning a maximum level to the new device (14).

14. A computer program product comprising code instructions for executing a method according to one of claims 1 to 13 of broadcasting a content by streaming in a peer-to-peer network (10) of client devices (11, 12, 13) which is connected to a content server (2), when said program is executed by a computer.

15. A storage means readable by a computing device on which a computer program product comprises code instructions for executing a method according to one of claims 1 to 13 of broadcasting a content in streaming by a peer-to-peer network (10) of client devices (11, 12, 13) which is connected to a content server (2).

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012154287 A